# EUROPEAN PATENT SPECIFICATION

(11) **EP 3 669 648 B1**
(45) Date of publication and mention of the grant of the patent: **12.11.2025**
(21) Application number: 18213393.4
(22) Date of filing: 18.12.2018
(51) Int. Cl.: A01M 1/00

(54) **METHOD OF DETECTION AND ELIMINATION OF NON-ENDEMIC INVASIVE SPECIES**
ERFASSUNGSMETHODE UND BESEITIGUNG VON NICHT ENDEMISCHEN INVASIVEN ARTEN
MÉTHODE DE DÉTECTION ET D'ÉLIMINATION D'ESPÈCES INVASIVES NON-ENDÉMIQUES

(43) Date of publication of application: 24.06.2020
(73) Proprietor: César Dos Santos, Gil, P-3830-594 Gafanha da Nazaré (PT); Batista Gonçalves, Carla Maria, 3830-594 Gafanha de Nazaré (PT)
(72) Inventor: CÉSAR DOS SANTOS, Gil, P-3830-594 Gafanha da Nazaré (PT); BATISTA GONÇALVES, Carla Maria, P-3830-594 Gafanha da Nazaré (PT); CÉSAR DOS SANTOS, Tiago André, P-3830-594 Gafanha da Nazaré (PT)
(74) Representative: Lourenço Martinho do Rosário, Ana Margarida

(56) References cited:
- EP-A1- 1 595 452
- US-A1- 2017 055 511
- US-B1- 6 653 971

## Description

### Scope of the Invention

The invention described in this patent document relates to an effective method of detecting and eliminating non-endemic invasive insects, particularly directed to insects living in community habitats, such as, but not limited to, the Asian wasp.

### Context of the Invention

The Asian Wasp, *Vespa velutina nigrithorax,* is a native species from tropical and temperate climates, endemic from the Eastern Asia and is essentially predatory. It has black head and an orange/yellow face. The body is dark-brown or black-velvet bounded by a yellow band and a single abdominal segment almost fully yellowish-orange.

Adult wasps of this species can be up to 3 cm in length, weighing between 300 and 400 milligrams and stings up to 6 mm with the possibility of injecting high doses of acetylcholine.

This species of wasp has as preferred food insects, among which are bees of the genus *Apismellifera,* producers of honey. The Asian wasp is about twice longer and about three to four times heavier than a bee of the genus *Apismellifera.*

This invasive species is a daytime species with an annual biological cycle, and has its maximum activity during the summer, from June to September, when most hive attacks are carried out.

The founding queens hibernate out of the nest during the winter mostly on trees, rocks or soils. During the months of February and March the surviving queens leave the place where they hibernate and create their own colony. The posture begins, and from the fertilized eggs the workers bees are born. These workers bees move to a secondary nest and are responsible for feeding the new larvae, as well as the queen.

The average life of a working wasp is between 30 and 55 days, with the queen's life lasting about 1 year.

Species *Vespa velutina nigrithoraxwas* was introduced in Europe accidentally in 2004, through a shipment coming from China to the south of France, and has spread rapidly in this country. Was identified in Spain in 2010, in Portugal and Belgium in 2011 and in Italy by the end of 2012.

*Vespa velutina nigrithorax* has a high reproduction and dissemination capacity, which represents a risk in several areas, namely: agricultural production, safety of the citizens, environment and especially for beekeeping. Agricultural production mainly suffers an indirect effect due to the decreased pollination activity of the bees. The impact on fruit production cannot also be neglected, as the diet of the wasps is, at an early stage, consisting of sugary liquids: nectar, ripe fruits - pears, apples, plums, grapes, figs, etc. The food consumption of this species is so significant that can cause huge damage in the orchards.

This species reacts more aggressively towards a menace than the *Crabro* wasp, a European species.

Being a non-indigenous species and a natural predator of bees and other insects, leads to environmental costs that impact biodiversity. On the other hand, potential natural predators, which include all insectivorous birds, as they are not yet accustomed to feed themselves on this specie, still cause a low number of casualties. However, in France, the European country where this species has inhabited for some time, there are already more frequent attacks of the birds to the nests.

A colony of *Vespa velutina nigrithorax* consumes about 500 g of honeybee per day which represents approximately 10% to 15% of a beehive. The presence of this species in an apiary induces hives to adopt a defensive attitude that causes an additional detrimental effect of decreasing beehive productivity.

The direct effects on beekeeping are evident, as the predation of European bees, *Apismellifera,* which do not have natural defences against *Vespa velutina nigrithorax,* in contrast with the Asian bee, makes hives vulnerable. This necessarily implies a reduction in the production of honey and related products, with direct economic consequences.

There is currently no effective control method to eliminate *Vespa velutin nigrithorax.* Among the currently used methods, none of them particularly effective, trapping is the most commonly used method for capturing and removing foreign specimen from the colony, and the detection and subsequent removal of the nests is done without any method. The traps, in addition to not being selective, are ineffective by the small number of wasps they catch. Detection of the nests for later elimination is the only effective way of solving the problem, however this is done in a totally random way, since it is dependent on ground beating so that its location is identified.

It is thus necessary to find an effective method for locating and later eliminating these nests.

Typical size of a primary nest of Asian wasp is comprised between 5-10 cm in diameter, with secondary nests being massively larger in the range of 50-80 cm in diameter. Each nest can house about 2200 wasps. These nests consist of chewed cellulose fibres, having a round or a "pear" shape, usually found in tall trees, in both urban and rural areas.

The elimination of nests should be performed at dawn or dusk, since the species *velutina nigrithorax* prefers daytime. Nowadays, a technical team eliminates the nest, through the dispersion of insecticide inside it burning the next.

Although it is a hive plague, the Asian wasp is not a source of disease transmission to both humans and bees, which means that it does not pose a known health threat.

Taking into account all the problems that Asian wasp as invasive species entails, an effective method of monitoring and eliminating this species is imperative.

### Background of the Invention

Nowadays the most common mode of combating the Asian wasp consists in placing of traps, for example but not exclusively, bottles or water carboys, with small holes on top of adequate size to entry of wasps. These containers have baits inside, a mixture of white wine or beer and a source of protein. The wasp enters the container and as it cannot get out, it ends up dying inside.

This solution is not effective, because it is not a selective solution, other species besides *Vespa velutina nigrithorax* are captured and eliminated.

With this type of solution only a small percentage of wasps is caught.

The only effective solution is to locate *Vespa velutina nigrithorax* habitats and then proceed to its total destruction.

Several prior documents refer to pest control methods.

Document WO2011084974 refers to an improved method for controlling flying insects. In this document, a trap is reported for flying insects with a neonicotinoid insecticide as well as a sugar derivative that attracts the insects in order to eliminate them.

Document WO2010148473 discloses a method for controlling insects from the emission of waves at the frequency of 30-300 Hz, which puzzles the orientation of the insects and thereby prevents the insect from entering the sphere of this signal, creating a protected area.

Document EP0129504 refers to a device intended for aspiration of insects from a particular container without causing their death, in order to transfer the insects to another location.

Patent document US7073748 refers to and protects an unmanned aerial vehicle that has a sensor system for the detection and identification of biological agents, including, but not limited to insects.

Patent document US6653971 discloses a method and system for detecting biota found in the air, such as, but not exclusively spores, pollen, insects and birds. This system also classifies the biota according to its capacity to cause damage to, for example, plantations, animal production among others. After assessing the biota's ability to perform production damage, various defence mechanisms are activated such as, but not limited to, the firing of laser pulses, microwaves, and the release of an unmanned aerial vehicle to eliminate pests.

Patent document US5012113 refers to a system for monitoring mobile objects, such as, but not exclusively, flying insects, through infrared. It is a micrometric system with a set of solar cells that allows to follow the course of the marked objects.

Document EP2491422 describes a method and system for locating objects, but not exclusively, insects. This system works with ultrasonic technology or microwave.

Document EP1595452 refers to a method pest management by a grower. The method includes gathering pest sampling data in connection with a crop of the grower. The pest sampling data includes pest identification information gathered using a pest identification sensor. The pest sampling data further includes locational information thereof. The method further includes transmitting the gathered pest sampling data to a pest sampling database. The pest sampling database includes pest sampling data regarding respective crops from a plurality of other growers. The pest sampling database is in electrical communication with pest management analysis software for generation of pest management analysis. The method further includes electronically receiving the generated pest management analysis.

Patent document US2017055511 refers to a system, apparatuses, and methods of classifying flying insects. The methods utilize recording the wingbeat frequency and amplitude spectrum of flying insects and comparing them to known or created insect models to properly classify the flying insect. The error rate of the classification is reduced by utilizing multiple inputs to the classification system, which may include a precise circadian rhythm for the time of year, current environmental conditions, and flight velocity or direction.

Patent document US6653971 describes a method and system for detecting airborne plant material, such as mold spores and pollen, and flying insects and birds, and classifying them as to whether they are harmful to field crops, production animals or other assets within a protected volume or area. Lasers, radar, and other types of radiation may be used to illuminate at least a perimeter around such assets to be protected, with radiation returns detected and applied to a pattern classifier to determine whether the detected objects of interest are harmful, benign or beneficial. In the event the objects are determined to be harmful (pests), a variety of measures controllable via the radiation returns may be taken to eliminate the harmful objects, these measures including firing pulses of laser, microwave or other radiation of a sufficient intensity to at least incapacitate them, or mechanical measures such as controlled drone aircraft to macerate the pests with propellers or spray limited amounts of pesticide in the area of the pests.

However, no document has been found in the prior art that refers to or incites to a method of monitoring and eliminating non-endemic invasive insect as presented in this document.

### Advantages of the Invention

The invention described in this document has the great advantage of presenting a method able to spot habitats and thus allowing the total elimination of non-endemic invasive insect, such as, but not exclusively, the Asian wasp of the species *velutina nigrithorax.*

Unlike the invention referred to in document EP1595452, although the latter refers to the use of sensors, these are used to detect pests and their subsequent identification. In the present invention, the aim of using sensors is to provide a way of detecting an insect so that it can then be captured and released carrying a microtransmitter, which will allow it to be tracked back to its nest for subsequent destruction. In addition, the present invention protects the method for detecting and tracking to the nest of an invasive species, while the method referred to in document EP1595452 protects the method for detecting and identifying the type of pest present.

### Brief Description of the Drawings

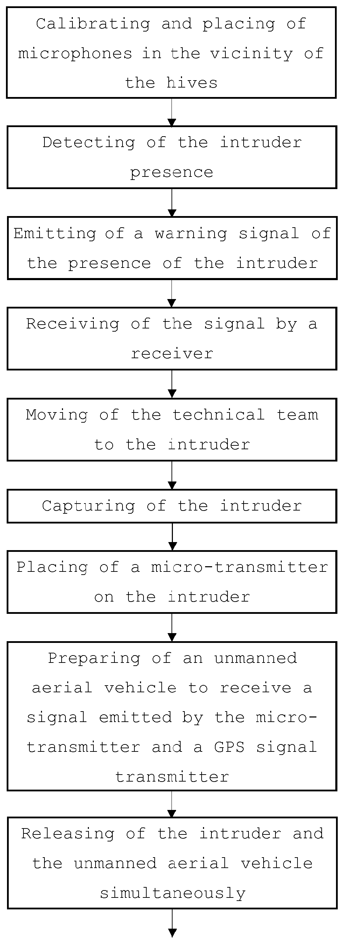

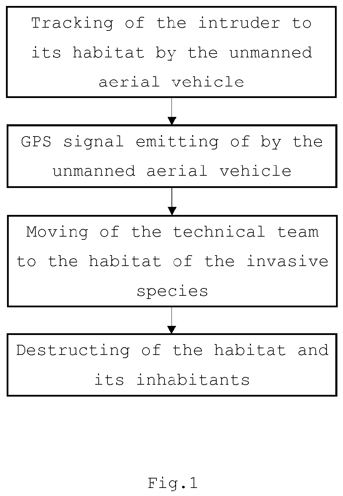

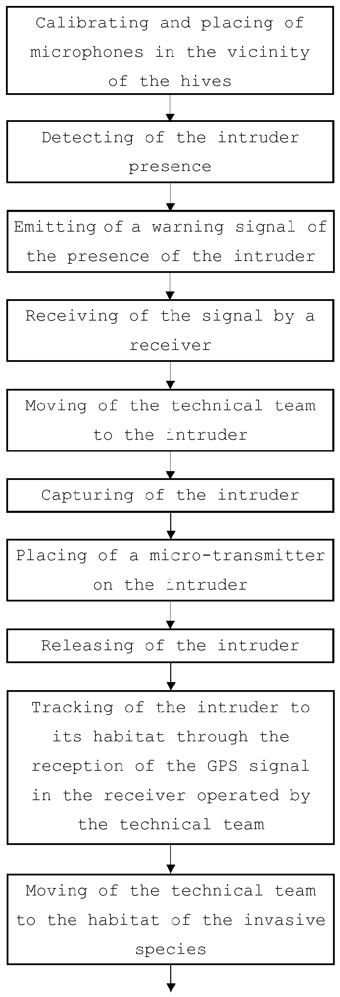

Figure 1 shows the flowchart for the various steps of the method referred to in the first embodiment of this invention.

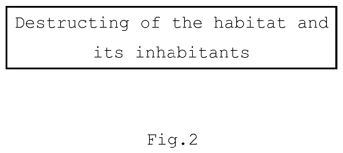

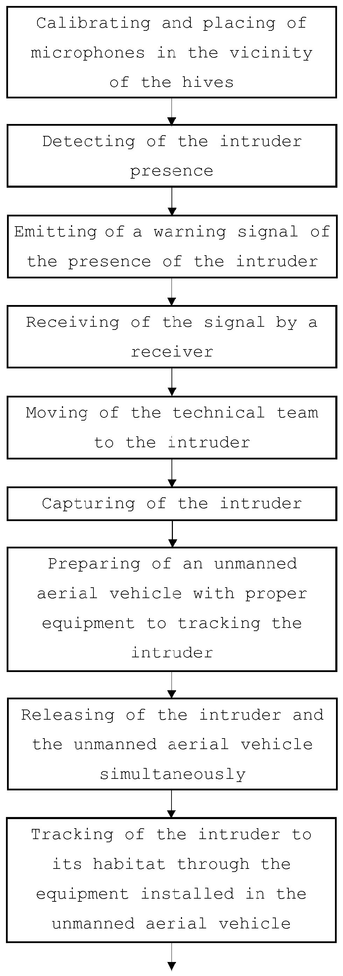

Figure 2 shows the flowchart concerning the different steps of the method referred to in the second embodiment of this invention.

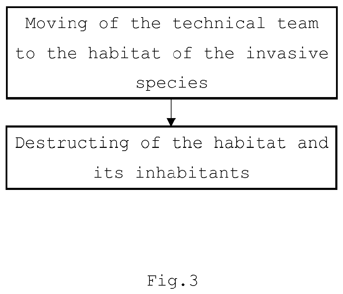

Figure 3 shows the flowchart concerning the different steps of the method referred to in the third embodiment of this invention.

### Detailed Description of the Invention

This invention presents a method to detect and eliminate non-endemic invasive insects, particularly directed to insects living in community habitats, such as, but not exclusively, the Asian wasp.

It is known that the frequency of the wing beating is characteristic of the build and size of the wings of the insects, depending on the strength of the wing of the insect in relation to the displacement of air mass which it has to perform. Thus, lighter insects have a frequency characteristic bigger than heavy ones. Like this, from this characteristic and with specialized equipment, namely microphones that are sensitive to the frequency of the wingspan of the Asian wasp *Vespa velutina nigrithorax,* it is possible to detect its presence in the surroundings of the apiaries.

The species *velutina nigrithorax* has a specific wing beat frequency. This frequency has two characteristic peaks, the first at 125 Hz and the second at 250 Hz. This characteristic frequency is comprised within a range different from the frequency produced by the species *Apismellifera* that also has two characteristic peaks, respectively at 250 Hz and 500 Hz.

When using sensitive microphones to frequency ranges of 50 Hz to 400 Hz, more specifically between 100 Hz and 300 Hz, covering the frequency of the beating of the wings of the *Vespavelutina nigrithorax,* placed near the hives, it is possible to signal the existence of the wasps in the outskirts of the hives.

The microphones are preferably placed in front of the entrance of the hives at a horizontal distance between the microphone and the hive of between 0,02 m and 2 m and more preferably between 0,05 m and 1,50 m, more specifically between 0,1 m and 1 m. The vertical distance between the microphone and the hive will be equal to the horizontal distance, so that an angle of substantially 45° relative to the entrance to the hive is accomplished.

After detection of the Asian wasp, it is captured by any known method, such as, traps for wasps or nets.

In a first embodiment, upon capture of the insect a micro-transmitter is delivered manually to the insect which will emit a signal, for example, but not exclusively: luminous, sonorous or electromagnetic, which is picked up by an unmanned aerial vehicle that will accompany the insect, equipped with a receiver for this same signal, and a GPS transmitter that allows to follow its trajectory, and thus to locate the final destination of the insect: the habitat.

The micro transmitter has to be chosen according to the environment, rural or urban, in which the habitat is. It is thus possible to increase the efficiency of the pursuit of the unmanned aerial vehicle to the intruder.

The insect will be released simultaneously with the unmanned aerial vehicle. The signal, for example, not exclusively luminous, sonorous or electromagnetic, emitted by the micro-transmitter and picked up by the receiver in the unmanned aerial vehicle, will allow to follow the insect a short distance.

The distance to which the unmanned aerial vehicle is from the intruder during the chase must be sufficient for the signal not to be lost, as well as the needed to avoid obstacles that eventually cross between the unmanned aerial vehicle and the intruder who is being pursued.

Having in mind that insects inhabit communal habitats, when the insect that carries the micro-transmitter enters the habitat stops moving, being then possible to know its exact location.

By having the information of the location of the habitat, it is possible to send a technical team to eliminate the habitat and the community of insects that inhabit it.

The present embodiment comprises the following steps:
1. Calibrating and placing of microphones in the vicinity of the hives;
2. Detecting of the intruder presence;
3. Emitting of the warning signal of the presence of the intruder;
4. Receiving of the warning signal by a receiver;
5. Moving the technical team to the intruder;
6. Capturing and placing of a micro-transmitter in the intruder;
7. Preparing of an unmanned aerial vehicle with a receiver for the signal emitted by the micro-transmitter and with a GPS signal transmitter;
8. Releasing of the intruder and of the unmanned aerial vehicle, simultaneous;
9. Tracking of the intruder to the habitat by the unmanned aerial vehicle;
10. GPS signal emitting by the unmanned aerial vehicle;
11. Receiving of the GPS signal in the receiver operated by the technical team;
12. Moving of the technical team to the habitat of the invasive insect;
13. Destructing of the habitat and its inhabitants.

In a second example, after the capture of the insect, a GPS emitter is manually placed on the insect to follow its trajectory, and thus locate the final destination of the insect: the habitat.

Considering that insects live in community habitats, when the insect carrying the GPS emitter enters the habitat, it is no longer possible to move about, so it is possible to know its exact location.

With the information of the location of the habitat, it is possible to send a technical team to eliminate the habitat and the community of insects that inhabit it.

The present example comprises the following steps:
1. Calibrating and placing of microphones in the vicinity of the hives;
2. Detecting of the intruder presence;
3. Emitting of the warning signal of the presence of the intruder;
4. Receiving of the warning signal by a receiver;
5. Moving of the technical team to the intruder;
6. Capturing and placing of a GPS emitter on the intruder;
7. Releasing of the intruder;
8. Tracking of the intruder to the habitat by receiving of a GPS signal in the receiver operated by the technical team;
9. Moving of the technical team to the habitat of the invasive insect;
10. Destructing of the habitat and its inhabitants.

In a third example, it will not be necessary to place any equipment on the intruder, being the tracking of the wasp by means of equipment placed on the unmanned aerial vehicle, such as, but not exclusively, by analysis of the sound produced by the wasp or by image recognition created by the reflection of electromagnetic radiation in the wasp.
1. Calibrating and placing of microphones in the vicinity of the hives;
2. Detection of intruder presence;
3. Emission of the warning signal of the presence of the intruder;
4. Reception of the signal by a receiver;
5. Moving the technical team to the intruder;
6. Preparation of an unmanned aerial vehicle with equipment to follow the intruder flight;
7. Simultaneous release of the intruder and of the unmanned aerial vehicle;
8. Tracking the intruder to the habitat by the unmanned aerial vehicle;
9. Moving the technical team to the habitat of the invasive insect;
10. Destructing of the habitat and its inhabitants.

The destruction of the habitat and its inhabitants is done by any known method of destruction.

In a preferred example, the habitat and its inhabitants are destroyed by collecting the habitat and the inhabitants, and subsequently thermally removed.

## Claims

1. Method of detection, location and elimination of non-endemic invasive insects comprising the following steps:
- calibrating and placing microphones in the vicinity of the hives;
- detecting the presence of an intruder in the vicinity of the hives by the use of microphones;
- emitting a warning signal of the presence of the intruder;
- receiving the warning signal of the presence of the intruder by a receiver;
- capturing the intruder;
- tracking the intruder;
- destructing the habitat and the inhabitants,
**characterized in that**
- the detecting the presence of the intruder in the vicinity of the hives being carried out by the microphone detection of the frequency of the beating of the wings of the intruder,
and by comprising at least one of the following steps:
- tracking of the intruder to the habitat through installed equipment of an unmanned aerial vehicle;
- the determination of the position of the intruder being carried out by means of a GPS signal.

2. Method according to claim 1 wherein the tracking of the intruder is performed by the analysis of the sound produced by the intruder.

3. Method according to claim 1 wherein the tracking of the intruder is performed by the reflection of electromagnetic radiation in the intruder.

4. Method according to claim 1 wherein a microtransmitter being placed in such a way that it is attached to the body of the intruder, with the unmanned aerial vehicle being equipped with a receiver for receiving the signal emitted by the microtransmitter attached to the body of the intruder and a GPS transmitter.

5. Method according to claim 4 wherein the microtransmitter being selected from among luminous, sonorous or electromagnetic microtransmitters.

6. Method according to claim 1 wherein a GPS transmitter is placed in such a way that is attached to the body of the intruder.

7. Method according to claim 1, wherein the intruder is the Asian wasp *Vespa velutina nigrithorax.*

8. Method according to claim 1, wherein the microphone is configured to emit a warning signal when the wing beat frequency of the intruder reaches two characteristic peaks at 125 Hz and 250 Hz.

9. Method according to claim 1, wherein the placement of the microphone at a horizontal distance between the microphone and the hive is comprised between 0,02 m and 2 m more accurately between 0,05 m and 1,50 m, more specifically between 0,1 m and 1 m.

10. Method according to claim 1, wherein the microphone is placed at a vertical distance from the hive equal to the horizontal distance between the microphone and the hive at an angle of substantially 45° with the hive.

11. Method according to claim 1, wherein the microphone is sensitive to frequencies between 50 Hz and 400 Hz, more specifically between 100 Hz and 300 Hz.

12. Method according to claim 1, wherein the habitat of the intruder is a nest, more specifically wasp nests.

13. Method according to claim 1, wherein the habitat and inhabitants are eliminated by any known method of destruction.

14. Method according to claim 13, wherein the method of destruction is thermal remotion.

## Patentansprüche

1. Verfahren zur Detektion, Lokalisierung und Eliminierung nicht-endemischer invasiver Insekten, umfassend die folgenden Schritte:
- Kalibrieren und Anordnen von Mikrofonen in der Nähe der Bienenstöcke;
- Detektieren des Vorhandenseins eines Eindringlings in der Nähe der Bienenstöcke mittels Mikrofone;
- Aussenden eines Warnsignals über das Vorhandensein des Eindringlings;
- Empfangen des Warnsignals über das Vorhandensein des Eindringlings durch einen Empfänger;
- Einfangen des Eindringlings;
- Verfolgen des Eindringlings;
- Zerstören des Habitats und der darin befindlichen Individuen,
**dadurch gekennzeichnet, dass**
- das Detektieren des Vorhandenseins des Eindringlings in der Nähe der Bienenstöcke durch die mikrofonbasierte Erfassung der Flügelschlagfrequenz des Eindringlings erfolgt,
und mindestens einen der folgenden zusätzlichen Schritte umfasst:
- Verfolgen des Eindringlings bis zum Habitat mittels installierter Ausrüstung auf einem unbemannten Luftfahrzeug;
- Bestimmen der Position des Eindringlings mittels GPS-Signal.

2. Verfahren nach Anspruch 1, wobei die Verfolgung des Eindringlings durch Analyse der vom Eindringling erzeugten Geräusche erfolgt.

3. Verfahren nach Anspruch 1, wobei die Verfolgung des Eindringlings durch Reflexion elektromagnetischer Strahlung am Eindringling erfolgt.

4. Verfahren nach Anspruch 1, wobei ein Mikrotransmitter so am Körper des Eindringlings befestigt wird, dass ein unbemanntes Luftfahrzeug mit einem Empfänger zum Empfang des vom am Körper des Eindringlings befestigten Mikrotransmitters ausgesendeten Signals sowie mit einem GPS-Sender ausgestattet ist.

5. Verfahren nach Anspruch 4, wobei der Mikrotransmitter aus der Gruppe von lichtemittierenden, schallemittierenden oder elektromagnetischen Mikrotransmittern ausgewählt wird.

6. Verfahren nach Anspruch 1, wobei ein GPS-Sender derart angebracht wird, dass er am Körper des Eindringlings befestigt ist.

7. Verfahren nach Anspruch 1, wobei es sich bei dem Eindringling um die Asiatische Hornisse (*Vespa velutina nigrithorax*) handelt.

8. Verfahren nach Anspruch 1, wobei das Mikrofon so konfiguriert ist, dass es ein Warnsignal aussendet, wenn die Flügelschlagfrequenz des Eindringlings zwei charakteristische Spitzen bei 125 Hz und 250 Hz erreicht.

9. Verfahren nach Anspruch 1, wobei das Mikrofon in einem horizontalen Abstand vom Bienenstock zwischen 0,02 m und 2 m, vorzugsweise zwischen 0,05 m und 1,50 m, insbesondere zwischen 0,1 m und 1 m, positioniert wird.

10. Verfahren nach Anspruch 1, wobei das Mikrofon in einem vertikalen Abstand zum Bienenstock angebracht wird, der dem horizontalen Abstand entspricht, sodass ein Winkel von etwa 45° zum Bienenstock entsteht.

11. Verfahren nach Anspruch 1, wobei das Mikrofon für Frequenzen zwischen 50 Hz und 400 Hz, vorzugsweise zwischen 100 Hz und 300 Hz, empfindlich ist.

12. Verfahren nach Anspruch 1, wobei es sich bei dem Habitat des Eindringlings um ein Nest handelt, insbesondere um ein Wespennest.

13. Verfahren nach Anspruch 1, wobei das Habitat und die darin befindlichen Individuen durch jedes bekannte Zerstörungsverfahren eliminiert werden.

14. Verfahren nach Anspruch 13, wobei das Zerstörungsverfahren eine thermische Entfernung umfasst.

## Revendications

1. Méthode de détection, de localisation et d'élimination d'insectes envahissants non endémiques comprenant les étapes suivantes:
- calibrer et placer des microphones à proximité des ruches;
- détecter la présence d'un intrus à proximité des ruches en utilisant des microphones;
- émettre un signal d'alarme avertissant de la présence de l'intrus;
- recevoir le signal d'alarme avertissant de la présence de l'intrus à l'aide d'un récepteur;
- capturer l'intrus;
- effectuer le suivi de l'intrus;
- détruire l'habitat et les habitants,
**caractérisé en ce que**
- la détection de la présence de l'intrus à proximité des ruches étant réalisée par la détection microphonique de la fréquence des battements d'ailes de l'intrus,
elle comprend au moins l'une des étapes suivantes:
- effectuer le suivi de l'intrus jusqu'à l'habitat grâce à l'équipement placé sur un véhicule aérien sans équipage;
- la détermination de la position de l'intrus étant réalisée au moyen d'un signal GPS.

2. Méthode selon la revendication 1, dans laquelle le suivi de l'intrus est effectué grâce à l'analyse du son produit par l'intrus.

3. Méthode selon la revendication 1, dans laquelle le suivi de l'intrus est effectué grâce à la réflexion du rayonnement électromagnétique dans l'intrus.

4. Méthode selon la revendication 1, dans laquelle un microtransmetteur est placé de telle sorte que qu'il est fixé sur le corps de l'intrus, avec le véhicule aérien sans équipage étant équipé d'un récepteur pour recevoir le signal émis par le microtransmetteur fixé sur le corps de l'intrus et d'un transmetteur GPS.

5. Méthode selon la revendication 4, dans laquelle le microtransmetteur est choisi parmi les microtransmetteurs lumineux, sonores ou électromagnétiques.

6. Méthode selon la revendication 1, dans laquelle un transmetteur GPS est placé de telle sorte qu'il est fixé sur le corps de l'intrus.

7. Méthode selon la revendication 1, dans laquelle l'intrus est le frelon asiatique *Vespa velutina nigrithorax.*

8. Méthode selon la revendication 1, dans laquelle le microphone est configuré pour émettre un signal d'alarme lorsque la fréquence de battement de l'aile de l'intrus atteint deux pics caractéristiques à 125 Hz et 250 Hz.

9. Méthode selon la revendication 1, dans laquelle le positionnement du microphone à une distance horizontale entre le microphone et la ruche est compris entre 0,02 m et 2 m, plus précisément entre 0,05 m et 1,50 m, plus spécifiquement entre 0,1 m et 1 m.

10. Méthode selon la revendication 1, dans laquelle le microphone est placé à une distance verticale de la ruche égale à la distance horizontale entre le microphone et la ruche, à un angle de sensiblement 45° avec la ruche.

11. Méthode selon la revendication 1, dans laquelle le microphone est sensible aux fréquences comprises entre 50 Hz et 400 Hz, plus spécifiquement entre 100 Hz et 300 Hz.

12. Méthode selon la revendication 1, dans laquelle l'habitat de l'intrus est un nid, plus spécifiquement des nids de frelon.

13. Méthode selon la revendication 1, dans laquelle l'habitat et les habitants sont éradiqués par toute méthode de destruction connue.

14. Méthode selon la revendication 13, dans laquelle la méthode de destruction est l'élimination thermique.
